# EUROPEAN PATENT APPLICATION

(11) **EP 2 223 592 A1**
(43) Date of publication of application: **01.09.2010**
(21) Application number: 09002694.9
(22) Date of filing: 25.02.2009
(51) Int. Cl.: A01K 97/12

(54) **Fish-bite indicator**

(71) Applicant: JiangSu Holly Corporation, Nanjing Jiangsu 210001 (CN)
(72) Inventor: Gardner, Mark, Ceaulmont 36200 (FR)
(74) Representative: Sanderson, James L.C.

(57) **Abstract**

A fish-bite indicator which includes two turning wheels 10 which have numbered dials 20 on their outer surfaces, which are turned by fishing line movement, and give a visual indication of how far and in which direction the fishing the has moved by means of fixed pointers 19.The fish-bite indicator also includes an anti-free-fall spring 15 which when hooked onto the metal rod 13 provides less or negative weight to achieve the correct balance, and a push-button locking mechanism which attaches the quick release connector 17 to the back support arm 16. Use Figure 1 to accompany abstract

## Description

### Technical Field

This invention relates to a special type of fish-bite indicator, which is a device used in fishing with a rod and line.

### Background Art

A fish-bite indicator is a device, well known to fishermen, used in fishing with a rod and line to indicate when a fish has taken the bait. In some types of fishing, such as carp fishing, it is desirable to know not only whether a fish has taken the bait and hence caused movement of the fishing line, but also to know in which direction the line has moved. This can give the angler some indication of the direction in which the fish is moving. One common form of bite indicator includes a weight that is suspended from a stretch of line hanging below the fishing rod, so that the weight is moved up or down when a fish takes the bait and hence moves the line. If the fish, having taken the bait, starts to swim or move away from the rod, the line will tighten and the weight will move in an upwards direction. On the other hand, if the fish moves in a direction to slacken the line, the weight will move downwards. This invention is a special type of fish-bite indicator which not only provides a visual indication of movement of a fishing line but can also show how far the line has moved by reading the figures from the numbered dials on a pair of turning wheels. This invention also incorporates a special type of push-button locking mechanism which allows the quick release connector to be removed quickly from the back support arm, and an anti-free-fall spring which works in a special way to provide less or negative weight to the fish-bite indicator.

### Brief Description of Figures in the Drawings

An example of the invention will now be described by referring to the accompanying drawings:

**Figure 1** shows an example of a complete fish-bite indicator according to the invention, incorporating the pair of turning wheels with numbered dials, the back support arm with the detachable quick release connector, and the anti-free-fall spring which provides less or negative weight to the fish-bite indicator.

**Figure 2** shows the side view of the complete bite indicator head incorporating the turning wheels and the wheel holder according to the invention.

**Figure 3** shows a front view of the complete bite indicator head incorporating the turning wheels and the wheel holder according to the invention.

**Figure 4** shows a top view of the complete bite indicator head incorporating the turning wheels and the wheel holder according to the invention.

**Figure 5** shows a back support arm with a detachable quick release connector and push-button locking mechanism according to the invention.

**Figure 6** shows how a weight adjusting slider works.

**Figure 7** shows how a fish-bite indicator works.

### Best Mode for Carrying Out the Invention

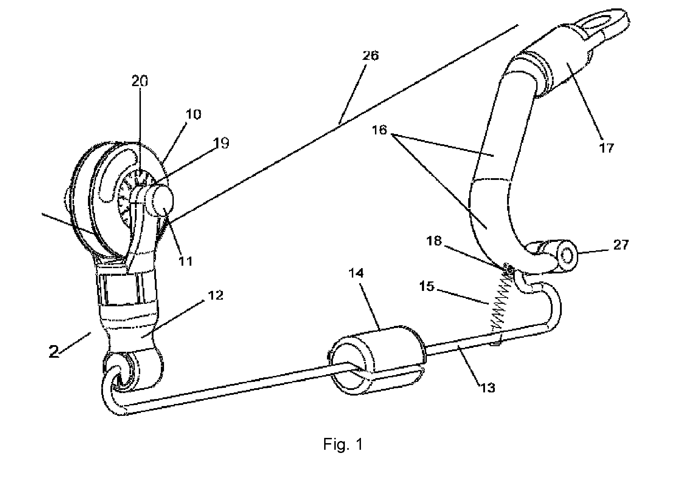

In figure 1 the fish-bite indicator 1 includes a pair of turning wheels 10 which are separate but can be adjusted to close the gap between them so that their inner surfaces touch and also have numbered dials 20 on their outer surfaces, a wheel holder 12, a metal rod 13 with a weight-adjusting slider 14 on it, a back support arm 16 and a quick release connector 17. The turning wheels 10 have a special finish on their inner surfaces that grips the fishing line 26. The turning wheels 10 can be adjusted by turning the adjusting screws 11 to decrease or increase contact of their inner surfaces. There is a weight-adjusting slider 14 on the metal rod 13. This weight-adjusting slider 14 can slide along the metal rod 13 and be rested in any position on the metal rod 13. By moving the weight-adjusting slider 14 to different positions on the metal rod 13 the weight bearing on the wheel holder 12 can be altered to increase or decrease its weight. If the front section (which includes the turning wheels 10, the wheel holder 12, the weight-adjusting slider 14 and the metal rod 13) is too heavy, an anti-free-fall spring 15 which is permanently attached to the back support arm 16 by a moulded loop 18, can be hooked onto the metal rod 13 to create less or negative weight. The metal rod 13 connects to the back support arm 16 with a shaft 27. This mechanism enables the front part (which includes the turning wheels 10, the wheel holder 12, the weight-adjusting slider 14 and the metal rod 13) to go up and down.

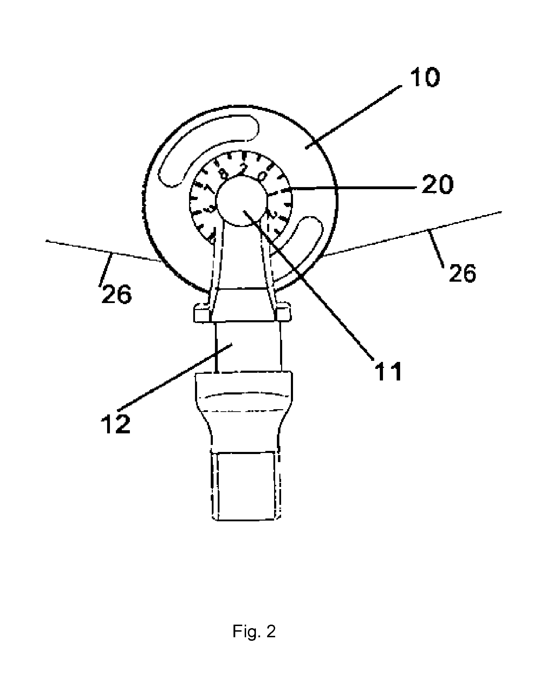

In figure 2 the turning wheels 10 have numbered dials 20 on their outer surfaces. When the fishing line 26 is tightened or slackened by the movement of a fish, the fishing line 26 moves in a forwards or backwards direction and the friction between the inner surface of the turning wheels 10 and the fishing line 26 causes the turning wheels 10 to rotate, thus the numbered dials 20 will rotate as well, giving a visual indication of the distance the fishing line 26 has moved in a forwards or backwards direction.

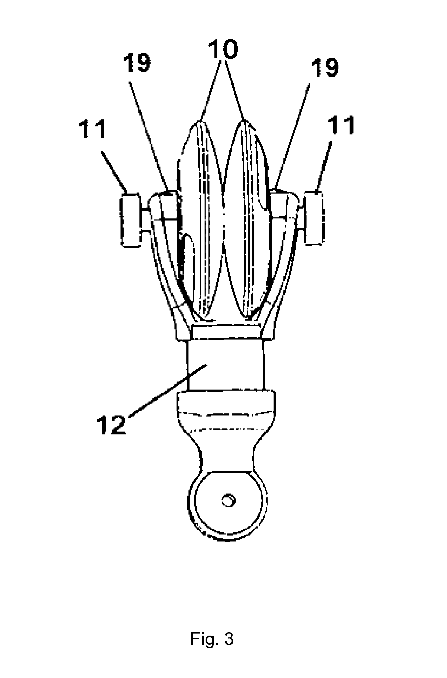

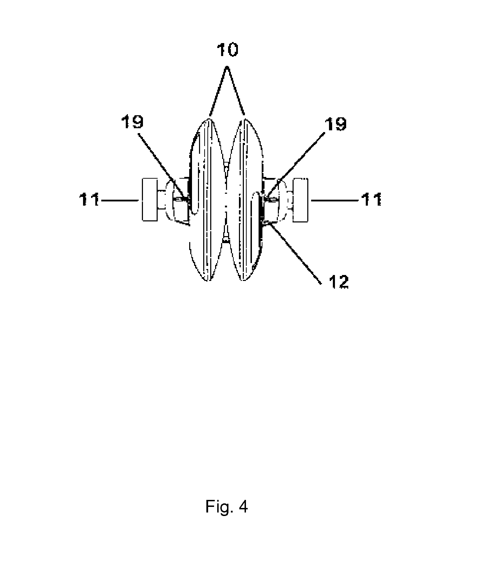

In figures 3 and 4 the fixed pointers 19 are shown on both sides of the top of the wheel holder 12. These fixed pointers 19 allow the reading of the figures on the numbered dials 20 (see figure 2). The figure on the numbered dials 20 (see figure 2), which the fixed pointer 19 points to, should be initially set to 0. When the turning wheels 10 are turned by the movement of the fishing line 26 (see figures 1 or 2), the number on the numbered dials 20 (see figure 2), which the fixed pointer 19 points to, will change. By reading the numbers, anglers can tell how far the fishing line 26 (see figures 1 or 2) has moved forwards or backwards. There are two wheel-tensioning screws 11 on both sides of the wheel holder 12. By turning the wheel-tensioning screws 11 clockwise or anticlockwise, the gap between the pair of turning wheels 10 can be adjusted to increase or decrease the pressure on the fishing line 26 (see figures 1 or 2) in order to achieve the degree of friction required to cause the turning wheels 10 to rotate.

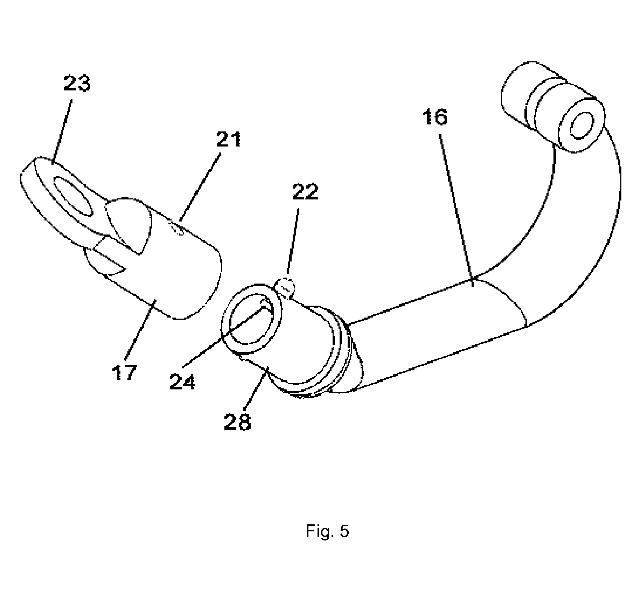

In figure 5 there is a quick release connector 17 that can be attached to a bank-stick. A bank-stick is a type of rod-rest with a female threaded end, to which an electronic bite indicator can be fitted. An electronic bite indicator is a device used by fishermen to give an audible and/or visual indication of a fish taking the fishing bait. The hole 23 in the quick release connector 17 is placed over the female threaded part on the top of a bank-stick so that the male threaded part of an electronic bite indicator can pass through the hole 23 and be screwed into the top of the bank-stick, thus attaching the quick release connector to the bank-stick. The back support arm 16 can be attached to or detached from the quick release connector 17 by the push-button locking mechanism which consists of a release pin 22 installed on the back support arm 16, a pin receiving hole 21, and a spring mechanism 24 which pushes the release pin 22 outwards. When attaching the back support arm 16 to the quick release connector 17, the release pin 22 can be pushed down and the end tube 28 of the back support arm 16 can be inserted into the quick release connector 17. The release pin 22 will go up through the pin receiving hole 21 on the quick release connector 17 when put in the correct position and will lock the two parts together (as shown in figure 8) When detaching the back support arm 16 from the quick release connector 17, the release pin 22 is pressed down while pulling the end tube 28 out of the quick release connector 17, and the two parts will separate.

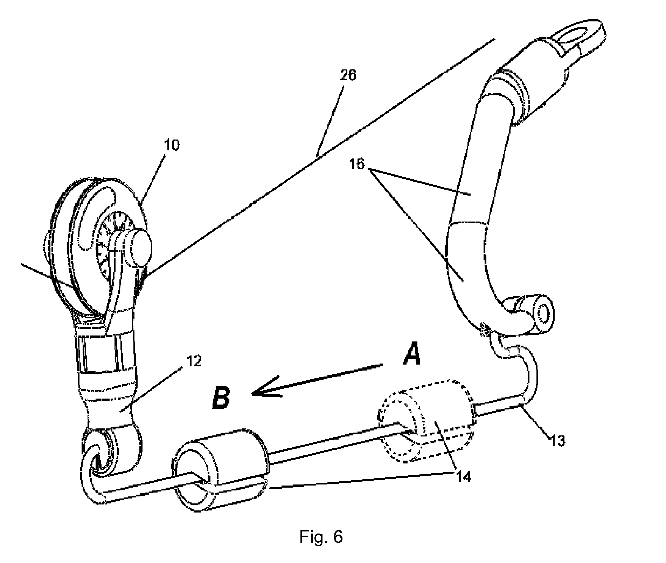

In figure 6, moving the weight-adjusting slider 14 from position A to position B on the metal rod 13 will increase the weight of the front section of the fish-bite indicator (which includes the turning wheels 10, the wheel holder 12, the weight-adjusting slider 14 and the metal rod 13). Moving the weight adjusting slider 14 in the opposite direction will have the opposite effect, but if the front section of the fish-bite indicator (which includes the turning wheels 10, the wheel holder 12, the weight-adjusting slider 14 and the metal rod 13) is still too heavy, the anti-free-fall spring 15 (see figure 1) can be attached to provide less or negative weight.

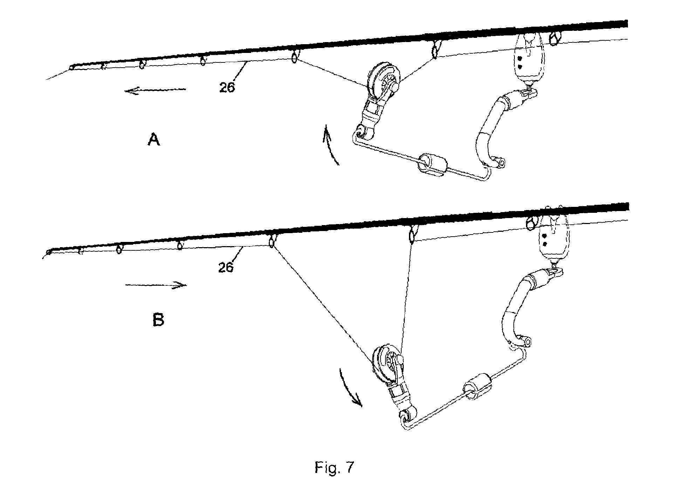

In figure 7, part A shows the fishing line 26 being tightened which causes the fish-bite indicator arm to move upwards, and part B shows the fishing line 26 being slackened which causes the fish-bite indicator to move downwards.

## Claims

1. A fish-bite indicator used in fishing to act as a visual indication of movement of a fishing line, which includes a pair of turning wheels, a wheel holder ,a pair of wheel tensioning screws, a quick release connector which has a push-button locking mechanism, and an anti-free-fall-spring.

2. A fish-bite indicator according to claim 1, in which the turning wheels can be turned clockwise or anticlockwise by the fishing line when the fishing line moves away from or towards the fishing rod.

3. A fish-bite indicator according to claim 1, in which the turning wheels have numbered dials on their outside surfaces.

4. A fish-bite indicator according to claim 3, in which fixed pointers register movement of the turning wheels on the numbered dials.

5. A fish-bite indicator according to claim 1, in which there is an anti-free-fall spring to provide less or negative weight when necessary.

6. A fish-bite indicator according to claim 1, in which a quick release connector has a push-button locking mechanism.

7. A fish-bite indicator according to claim 1, a pair of turning wheels, a wheel holder and a pair of wheel tensioning screws, just these parts, as an assembled complete unit, can be used as a fish-bite indicator.
